Europäisches Patentamt

European Patent Office

Office européen des brevets

(19)

(11) EP 0 624 025 B1

(12) EUROPEAN PATENT SPECIFICATION

(45) Date of publication and mention
of the grant of the patent:
**01.09.1999 Bulletin 1999/35**

(51) Int Cl.6: **H04N 1/04**

(21) Application number: **94202074.4**

(22) Date of filing: **26.09.1989**

(54) **Image forming apparatus**

Bilderzeugungsgerät

Dispositif de génération d'images

(84) Designated Contracting States:
**DE FR GB IT**

(30) Priority: 27.09.1988 JP 23970888
05.12.1988 JP 30840988
26.12.1988 JP 32835288
27.12.1988 JP 33059188
23.01.1989 JP 1185189

(43) Date of publication of application:
**09.11.1994 Bulletin 1994/45**

(62) Document number(s) of the earlier application(s) in
accordance with Art. 76 EPC:
**89309780.8 / 0 361 857**

(73) Proprietor: **CANON KABUSHIKI KAISHA
Tokyo (JP)**

(72) Inventors:
• **Abe, Makoto**
**Ohta-ku, Tokyo (JP)**
• **Seto, Kaoru**
**Ohta-ku, Tokyo (JP)**
• **Kawana, Takashi**
**Ohta-ku, Tokyo (JP)**
• **Kashihara, Atsushi**
**Ohta-ku, Tokyo (JP)**
• **Mano, Hiroshi**
**Ohta-ku, Tokyo (JP)**
• **Saito, Tetsuo**
**Ohta-ku, Tokyo (JP)**
• **Sasame, Hiroshi**
**Ohta-ku, Tokyo (JP)**
• **Itoh, Michio**
**Ohta-ku, Tokyo (JP)**
• **Ohkubo, Masaharu**
**Ohta-ku, Tokyo (JP)**
• **Yamada, Hiromichi**
**Ohta-ku, Tokyo (JP)**
• **Ojima, Masaki**
**Ohta-ku, Tokyo (JP)**

(74) Representative:
**Beresford, Keith Denis Lewis et al
BERESFORD & Co.
2-5 Warwick Court
High Holborn
London WC1R 5DJ (GB)**

(56) References cited:
**EP-A- 0 021 831**

• **PATENT ABSTRACTS OF JAPAN vol. 11, no. 138
(E-503) 2 May 1987 & JP-A-61 277 262 (TOSHIBA
CORP) 8 December 1986**
• **IBM TECHNICAL DISCLOSURE BULLETIN,
vol.22, no.9, 28 February 1980 pages 3951 - 3952
T.H.MILLER 'VARIABLE RESOLUTION
PRINTER'**
• **PATENT ABSTRACTS OF JAPAN vol. 11, no. 237
(E-528) 4 August 1987 & JP-A-62 049 779
(CANON INC) 4 March 1987**

## Description

The present invention relates to an image forming apparatus for recording an image on a recording medium on the basis of input data.

A laser beam printer is widely known in which a latent image is formed on a rotary drum by scanning a laser beam using a rotary polygon mirror or the like and is transferred onto a paper sheet after it is developed, thereby recording an image.

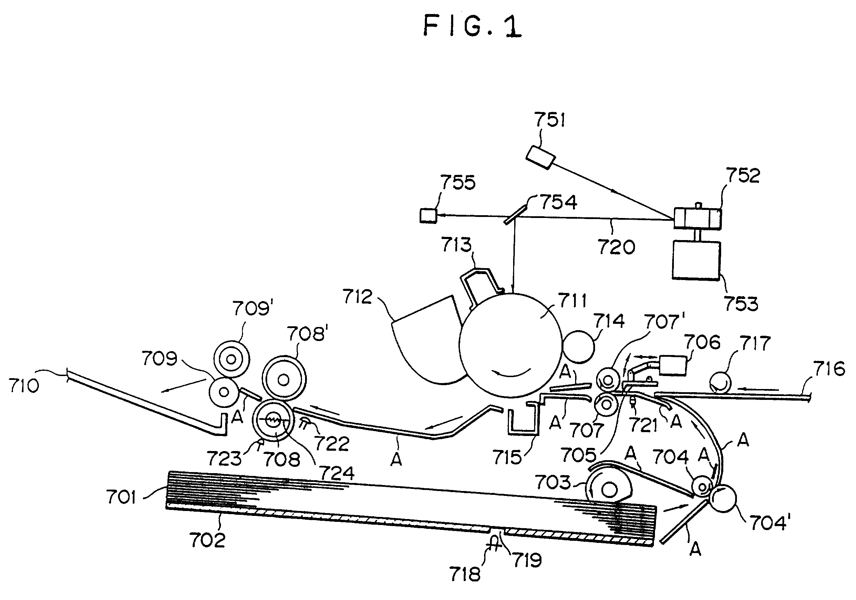

Fig. 1 shows an arrangement of a conventional laser beam printer, and a description will be made below with reference to Fig. 1.

In Fig. 1, a paper cassette 702 stores paper sheets 701 as recording media. Uppermost one of the paper sheets 701 in the cassette 702 is separated by a sheet feed cam 703, so that its leading edge portion is fed to sheet feed rollers 704 and 704'. The cam 703 is intermittently rotated every sheet feed operation. A reflection type photo-sensor 718 detects light reflected by the sheet 701 through a hole 719 formed in the bottom portion of the paper cassette 702 to detect the presence/absence of paper sheets.

When the paper sheet 701 is fed to a gap portion between the sheet feed rollers 704 and 704' by the sheet feed cam 703, the rollers 704 and 704' are rotated while lightly pressing the paper sheet 701 to feed the sheet 701. When the sheet 701 is fed and its leading edge reaches a position of a registration shutter 705, the paper sheet 701 is stopped by the registration shutter 705, and the sheet feed rollers 704 and 704' are kept rotated while slipping on the paper sheet 701 to generate a feed torque. In this case, when a registration solenoid 706 is driven to release the registration shutter 705 upward, the paper sheet 701 is fed to convey rollers 707 and 707'. The registration shutter 705 is driven in synchronism with a given timing of an image formed by focusing a laser beam 720 on a photosensitive drum 711. A photo-sensor 721 detects whether or not the paper sheet is present at the position of the registration shutter 705.

A rotary polygon mirror 75 is driven by a polygon mirror motor 753, and guides the beam 720 from a semiconductor laser 751 onto the photosensitive drum 711 via a reflection mirror 754, thereby forming a recording image on the photosensitive drum 711. A beam detector 755 arranged at a scan start position of the beam 720 detects the beam 720 to output a known BD signal which defines an image write timing in a main scan direction.

Thereafter, the paper sheet gains a feed torque by the convey rollers 707 and 707' in place of the sheet feed rollers 704 and 704', and is fed to the photosensitive drum 711 portion. An image exposed on the photosensitive drum 711 is transferred onto the paper sheet 701 in cooperation of a cleaner 712, a charger 713, a developing unit 714, and a transfer charger 715. The paper sheet 701 on which an image has been transferred is subjected to fixing processing by fixing rollers 708 and 708', and is then ejected onto a stacker 710 by sheet eject rollers 709 and 709'.

In Fig. 1, symbol A designates a guide for regulating a feed direction of the paper sheet 701.

A sheet feed table 716 allows to manually supply sheets one by one therefrom in addition to an automatic sheet feed operation from the paper cassette 702. A paper sheet manually fed to a gap portion between a manual sheet feed roller 717 and the sheet feed table 716 is fed while being lightly pressed by the roller 717 until its leading edge reaches the registration shutter 705. When the paper sheet has reached the shutter 705, the manual sheet feed roller slips. The following feed sequence is the same as that in the cassette sheet feed operation.

Note that the fixing roller 708 houses a fixing heater 724. The heater 724 controls a surface temperature of the fixing roller 708 to a predetermined temperature on the basis of a temperature detected by a thermistor 723 which is in slipping contact with the roller surface, thereby thermally fixing a recorded image on the paper sheet 701. A photo-sensor 722 detects whether or not a paper sheet is present at the position of the fixing rollers 708 and 708'.

The printer described above is not solely used but is connected to a controller through an interface cable. The printer receives a print command and an image signal from the controller to perform a print sequence. The arrangement of the interface cable and signals exchanged through the interface cable will be briefly described below.

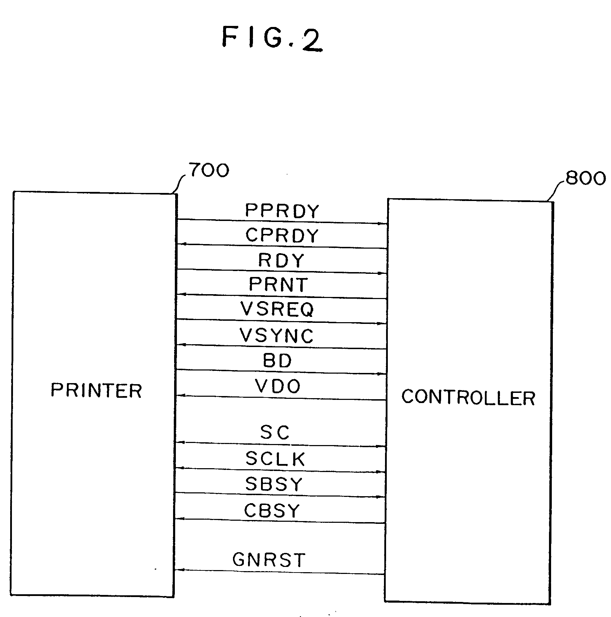

Fig. 2 shows interface signals between a conventional printer and a controller.

As a printer 700, the laser beam printer described with reference to Fig. 1 can be employed.

Interface signals will be described below:

| | |
|---|---|
| PPRDY Signal | informs the controller that the power switch of the printer is turned on and is ready |
| CPRDY Signal | informs the printer that the power switch of the controller is turned on |
| RDY Signal | informs that the printer is ready to start or continue a print operation when it receives a PRNT signal (to be described later) from the controller |

For example, when paper sheets in the paper cassette 702 are used up and the print operation cannot be executed, the RDY signal goes to FALSE level.

| | |
|---|---|
| PRNT Signal | an instruction signal from the controller to the printer, which causes the printer to start the print operation or to continue the print operation during the print operation of the printer |

The printer starts the print operation upon reception of this signal.

| | |
|---|---|
| VSREQ Signal | indicates that both the RDY and PRNT signals are at TRUE level and the printer is ready to receive a VSYNC signal (to be described later) |
| VSYNC Signal | a vertical (sub-scan) sync signal of an image to be printed, which is output from the controller to the printer to synchronize an image on the drum with a paper sheet |
| BD Signal | a horizontal (main scan) sync signal of an image to be printed, which indicates that a laser beam is present at a main scan start position |
| VDO Signal | an image signal to be printed output from the controller. The printer outputs a black image in response to the TRUE-level VDO signal, and outputs a white image in response to the FALSE-level VDO signal |
| SC Signal | a bidirectional serial 8-bit signal for exchanging an instruction signal COMMAND (to be described later) from the controller to the printer, and a status information signal STATUS from the printer to the controller. Both the controller and the printer use an SCLK signal (to be described later) as a sync signal when this signal is exchanged. Since this signal is a bidirectional signal, an SBSY signal and a CBSY signal (to be described later) are used for I/O control. |

The signal COMMAND is an 8-bit serial signal, and includes various control commands to the printer, such as a sheet feed instruction for turning off only the fixing heater of the printer to keep an energy-saving state, i.e., to set a so-called sheet feed state, a sheet, feed cancel instruction for canceling the sheet feed state and turning on the fixing heater, a cassette sheet feed instruction for supplying paper sheets from the paper cassette, a manual sheet feed instruction for manually supplying paper sheets, and the like.

The signal STATUS is an 8-bit serial signal, and informs the printer of various states, i.e., that the printer state is a wait state in that the temperature of a fixing device does not yet reach a print temperature, a paper jam occurs, there are no paper sheets in the paper cassette, and so on.

| | |
|---|---|
| SCLK Signal | a sync pulse signal used by the printer to fetch the signal COMMAND or by the controller to fetch the signal STATUS |
| SBSY Signal | a signal for occupying an SC signal line and an SCLK signal line prior to transmission of the signal STATUS from the printer |
| CBSY Signal | a signal for occupying the SC signal line and the SCLK signal line prior to transmission of the signal COMMAND from the controller |
| GNRST Signal | a reset signal output from the controller to initialize the printer |

The operations between the printer and controller sectipns will be described below with reference to the system diagram showing connections between the printer and the controller.

Assume that the power switch of the printer is turned on, and the power switch of the controller is turned on. In this case, the printer initializes its internal states, and transmits the PPRDY signal to the controller. On the other hand, the controller initializes its internal states, and outputs the CPRDY signal to the printer. Thereafter, the printer energizes the fixing heater 724 housed in the fixing roller 708, and when the surface temperature of the fixing rollers 708 and 708' reaches a fixing temperature, the printer outputs the RDY signal to the controller.

Upon reception of the RDY signal, the controller transmits the PRNT signal according to necessity of the print operation. When the printer receives the PRNT signal, it rotates the photosensitive drum 711 to uniformly initialize the surface voltage of the photosensitive drum, and simultaneously drives the sheet feed cam 703 in a cassette sheet feed mode to feed the leading edge portion of a paper sheet to the position of the registration shutter 705. In a manual sheet feed mode, a paper sheet manually supplied from the sheet feed table 716 is fed to the position of the registration shutter 705. When the printer is ready to receive the VDO signal, it transmits the VSREQ signal to the controller.

Upon reception of the VSREQ signal, the controller transmits the VSYNC signal to the printer. When the printer receives the VSYNC signal, it drives the registration solenoid 706 in synchronism with the VSYNC signal to release the registration shutter 705. Thus, the paper sheet is fed to the photosensitive drum 711. After the controller outputs the VSYNC signal, it sequentially transmits the image signal VDO to be recorded to the printer in synchronism with the BD signal transmitted from the printer as a horizontal sync signal.

The printer turns on/off a laser beam in accordance with the VDO signal to form a latent image on the photosensitive drum 711. The latent image is developed with a toner in the developing unit 714, and the toner image is transferred onto the paper sheet by the transfer charger 715. Thereafter, the transferred image is fixed by the fixing rollers 708 and 708'. The paper sheet is then ejected.

When the sheet feed mode of the printer is switched to the cassette sheet feed mode or the manual sheet feed mode, the controller transmits an 8-bit serial code corresponding to the sheet feed mode to be selected to the printer in synchronism with the SCLK pulse signal through the SC signal line. When the printer receives the cassette sheet feed mode code, the printer is switched to a mode wherein the sheet feed roller 717 is not driven in the print operation, and the sheet feed cam 703 is driven to supply paper sheets from the cassette.

On the other hand, when the printer receives the manual sheet feed mode code, the printer is switched to a mode wherein the sheet feed cam 703 is not driven in the print operation, and the manual supply roller 717 is driven to allow a manual sheet feed operation.

When the power switch of the printer is initially turned on, the printer sets the sheet feed mode in the "cassette sheet feed mode" as an initial mode.

The GNRST signal is used to initialize the printer upon instruction from the controller. When the printer receives the GNRST signal from the controller, it resets all the executing jobs, and is reset to a state immediately after power-on. When a plurality of printers are connected to the controller, this signal is used to set the connected printers to an identical state.

In the conventional arrangement, a printer and a computer as a controller normally exchange interface signals through a connection cable having a length of 1 metre to several metres. A computer connected to the printer is not limited to one type, but various computers are often connected to the printer.

In one type of printer, a dot density select switch is provided to an operation panel of the printer, and is manually switched by a serviceman or user to select a desired output dot density. In another printer free from a manual operation, the printer receives a dot density select command from the computer through a communication line, and rotations of its polygon scanner motor are changed in accordance with the designated dot density.

The printer which changes a dot density by the select switch on the operation panel or the printer which changes a dot density upon reception of a dot density change command from a computer suffers from the problem that a command to switch resolution during operation can distort the final image.

European Patent Application No. EP-A-0,021,831 discloses electrophotographic image recording apparatus in which a pixel clock is controlled in accordance with the variation in the scanning speed of a light beam in order to maintain the image resolution set.

IBM Technical Disclosure Bulletin, vol. 22, no. 9, 28 February 1980, pages 3951-3952, T.H. Miller 'Variable Resolution Printer'; Patent Abstracts of Japan, vol. 11, no. 138 (E-503) 2 May 1987 & JP-61 277 262 (Toshiba Corp.) 8 December 1986; and Patent Abstracts of Japan vol. 11, no. 237 (E-528) 4 August 1987 & JP-A-62 049 779 (Cannon Inc) 4 March 1987 disclose electrophotographic image forming apparatuses in which the scanning speed of a modulated light beam is controlled so as to change recording resolution.

In accordance with the invention there is provided an image processing apparatus as set out in claim 1.

The present invention can be more clearly understood from the following description of preferred embodiments taken in conjunction with the accompanying drawings, in which:

Fig. 1 is a diagram showing a known laser printer;

Fig. 2 is a block diagram showing interface signals between a conventional laser beam printer and a controller;

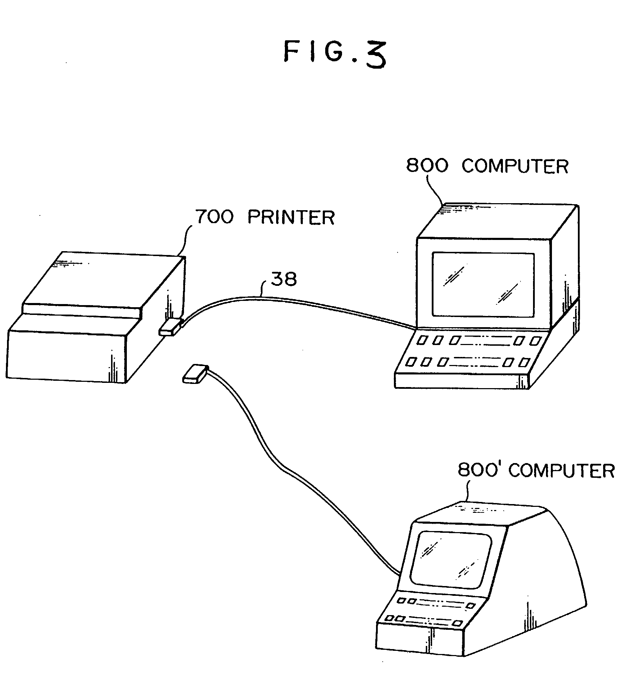

Fig. 3 is a view showing connections between a conventional printer and a computer;

Fig. 4 is a block diagram of a laser beam printer according to a first embodiment of the present invention;

Fig. 5 is a detailed block diagram of a polygon mirror motor control circuit;

Fig. 6 is a table showing the relationship among values to be set in a pre-set counter in the polygon mirror motor control circuit, rotations of a polygon mirror motor, and an output dot density;

Fig. 7 is a detailed block diagram of a drum motor control circuit;

Fig. 8 is a detailed block diagram of a BD signal process circuit;

Figs. 9-1A to 9-1E are operation timing charts of the BD signal process circuit shown in Fig. 8 and a mask signal generating circuit shown in Figs. 9-3 and 9-4;

Fig. 9-2 is a view for explaining a mask area;

Figs. 9-3 and 9-4 are detailed block diagrams of the mask signal generating circuit;

Fig. 10 is a detailed block diagram of a laser drive circuit;

Figs. 11 and 12 are operation flow charts of the eighth embodiment;

Figs. 13-1A to 13-1E are operation timing charts of a mask signal generating circuit shown in Fig. 11-2;

Fig. 13-2 is a detailed block diagram of the mask signal generating circuit.

A preferred embodiment of the present invention will now be described with reference to the accomapnying drawings.

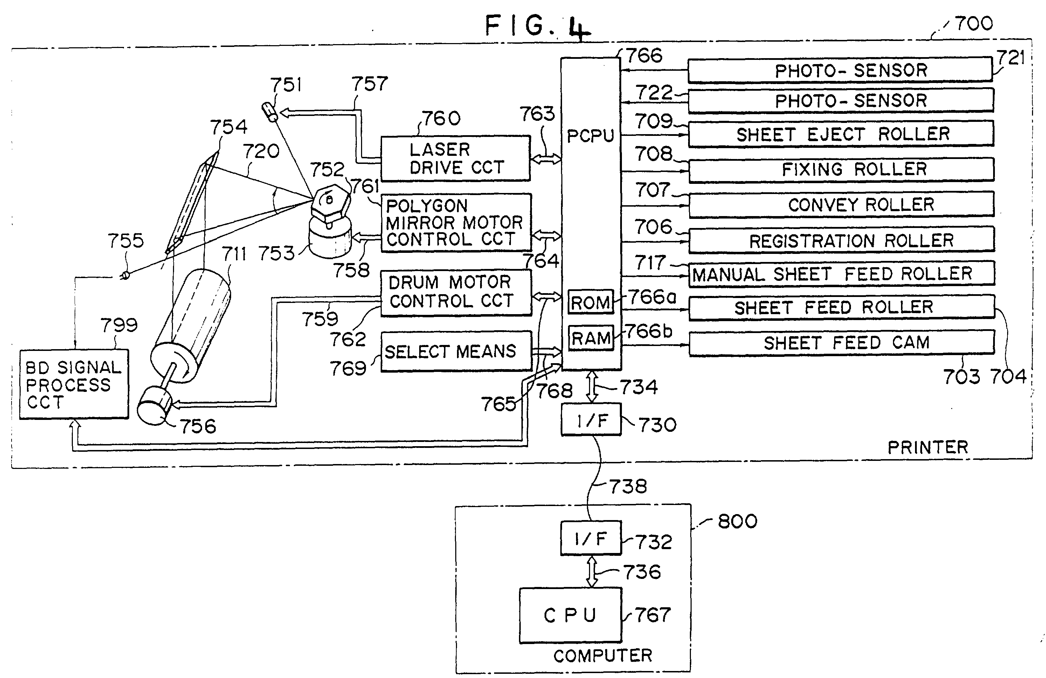

Fig. 4 is a block diagram of a laser beam printer according to the present invention. The mechanism portion of this embodiment is substantially the same as that in Fig. 1, and the same reference numerals in Fig. 4 denote the same parts as in Fig. 1.

In Fig. 4, a computer (external apparatus) 800 outputs data to a printer 700, and controls a dot density, and the like of the printer 700.

The printer 700 includes a drum motor 756 for rotating a photosensitive drum 711, a laser drive circuit 760 for driving a semiconductor laser 751 through a control line 757 under the control of a PCPU 766 through a data line 763, a polygon mirror motor control circuit 761 for controlling a polygon mirror motor 753 for rotating a rotary polygon mirror 752 through a control line 758 under the control of the PCPU 766 through a data line 764, and a drum motor control circuit 762 for controlling the drum motor 756. The drum motor control circuit 762 controls rotation of the drum motor 756 through a control line 759 under the control of the PCPU 766 through a data line 765.

The drum motor 756 is used as a sheet feed drive source through gears (not shown).

In place of an arrangement wherein an image signal from the computer 800 is input to the laser drive circuit 760 via the data line 763 through the PCPU 766, the image signal may be directly input to the laser drive circuit 760 through an I/O inter-face 730.

The PCPU (microprocessor) 766 controls the overall printer 700. The PCPU 766 incorporates a ROM memory 766a for storing a control program, a RAM memory 766b for storing various control data, and an I/O port (not shown) for controlling I/O data.

The PCPU 766 controls all the drive systems, e.g., a convey/eject drive system and a system for executing an electrophotographic process through the I/O port. Fig. 4 illustrates only a recording sheet drive system, and connections/control of sensors provided to the drive system and an optical system, and other systems are omitted. However, other systems can be controlled by a known method, as a matter of course.

The computer 800 for controlling the printer 700 includes an I/O interface 732 for performing serial communication and image communication with the printer 700. Note that the computer 800 also includes a CPU 767 for executing various data processing operations.

The printer 700 and the computer 800 are connected through their own I/O interfaces 730 and 732, a connection cable 738, and their own I/O buses 734 and 736. I/O signals exchanged through the connection cable 738 are the same as those shown in Fig. 40.

A select means 769 comprises a rotary switch, or the like. The PCPU 766 can load a set value of the select means 769 through a data line 768 as needed. In this embodiment, the select means is used to switch a dot density, and an output dot density of 240 dpi, 300 dpi, 480 dpi, or the like is determined according to the set position of the select means 769.

A BD signal process circuit 799 converts a beam detect signal from a beam detector 755 into a digital signal, and outputs the digital signal.

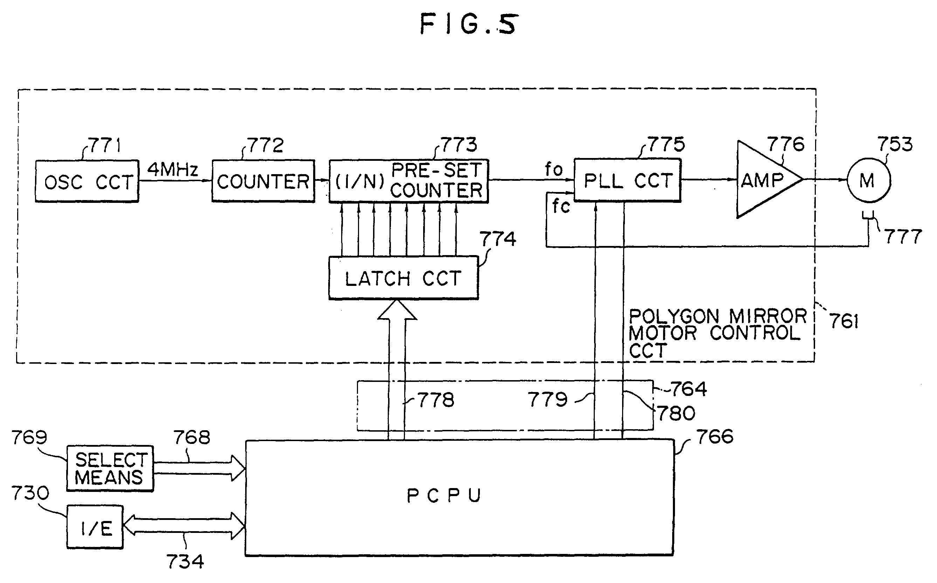

Fig. 5 shows in detail the polygon mirror motor control circuit 761.

In Fig. 5, a crystal oscillator circuit 771 generates a 4-MHz clock, and supplies it to a counter 772. The counter 772 decrements the clock from the crystal oscillator circuit 771 to (1/1,000). A pre-set counter 773 decrements the output from the counter 772 to "1/N" in accordance with data "N" set by a latch circuit 774. An output clock fo from the pre-set counter 773 serves as a reference signal for a PLL circuit 775.

More specifically, the clock fo is given by:

$$fo = 4 \text{ MHz} \times (1/1{,}000) \times (1/N)$$

The latch circuit 774 is loaded with an arbitrary value ("1" to "256") sent from the PCPU 766 through a data line 778. The latch circuit 774 is connected to the pre-set counter 773 through 8-bit data lines. The pre-set counter 773 determines a decrement value (1/N) in accordance with the value set in the latch circuit 774.

The PLL circuit 775 detects a difference signal between the reference frequency fo and a signal fc obtained from a rotation pulse signal generator 777 which generates a one-shot pulse per revolution of a polygon mirror motor 753, so that the signal fc is equal to the reference frequency fo. The PLL circuit 775 controls rotation of the polygon mirror motor 753 on the basis of the difference signal. In this case, the PLL circuit starts rotation of the motor upon reception of a motor ON signal 779 from the PCPU 766, and sends back a ready signal to the PCPU 766 when the rotational speed (rotations) of the polygon mirror motor 753 has reached a predetermined rotational speed and is rotated at a constant speed.

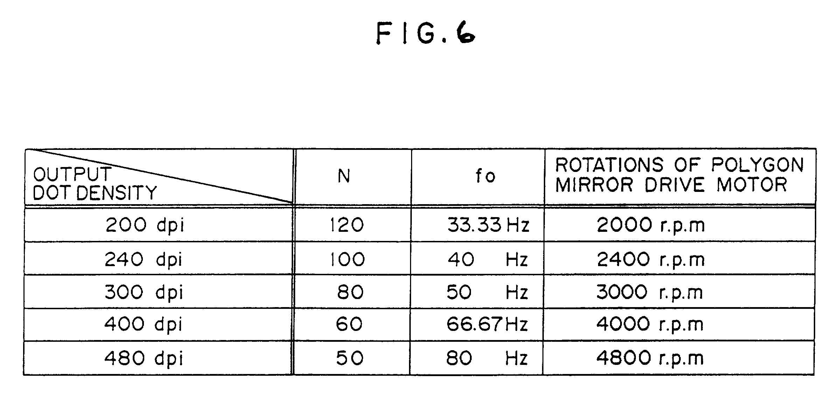

Fig. 6 shows the relationship among an output dot density, output clocks of the counters 772, 773, and the rotational speed of the polygon mirror motor 753.

As shown in Fig. 6, a 4-MHz oscillation frequency from the oscillator circuit 771 is frequency-divided in correspondence with an output dot density to change the rotational speed of the polygon mirror motor 753 accordingly. Thus, the scan speed of a laser beam 720 by the rotary polygon mirror 752 is changed, thereby obtaining an arbitrary output dot density.

A pre-set value for the pre-set counter 773 is latched by the latch circuit 774 under the control of the PCPU 766 through the data line 778. The PCPU 766 loads a value set at the select means 769 through the data line 768, and causes the latch circuit 774 to latch a value corresponding to the set value.

When a dot density, e.g., 240 dpi is directly designated in the latch circuit 774 in accordance with an output dot density designating command (to be described later) sent from the computer 800 through the I/O interface 732 and the connection cable 738, a value (N = 100) can be set.

The oscillation frequency by a crystal oscillator of the oscillator circuit 771 is selected by calculating backward from the rotational speed of the polygon mirror motor 753 for obtaining a required output dot density. That is, the oscillation frequency is selected to be a least common multiple of the fo values corresponding to output dot densities.

More specifically, when the dot densities shown in Fig. 6 are required, the required rotational speed of the polygon mirror motor 753 and the output frequency fo of the pre-set counter take values shown in Fig.6, and the least common multiple of these fo values is 13,333.333 Hz.

In this embodiment, an integer multiple (300 times) of this least common multiple is used as the oscillation frequency of the oscillator circuit 771. For this reason, 4 MHz are selected.

In this manner, the scan speed of the optical beam 720 with respect to the surface of the photosensitive drum 711 can be arbitrary selected in accordance with a designating command from the computer 800 or a set value of the select means 769.

In this embodiment, the pre-set counter 773 comprises an 8-bit counter. However, if a 16-bit counter is used, i.e., if the number of bits is increased, the number of select steps of the scan speed can be increased from ($2^8$ = 256 steps) for 8 bits to, e.g., ($2^{16}$ = 65,536 steps).

With this arrangement, the printer can be operated in correspondence with any output dot density request.

Note that the content of the designating command sent from the computer 800 may designate the value of dpi or may be data itself to be loaded in the pre-set counter.

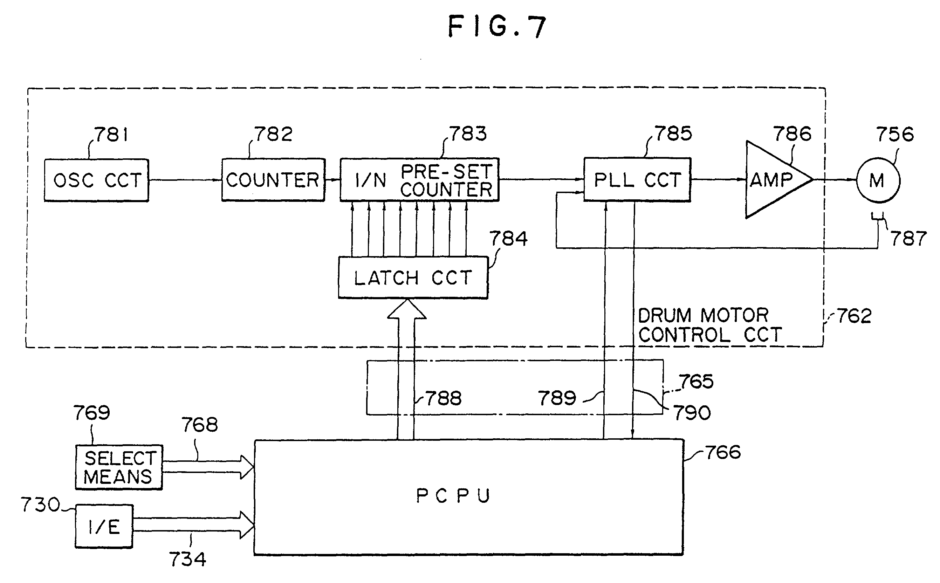

Fig. 7 shows in detail the drum motor control circuit 762.

As shown in Fig. 7, the drum motor control circuit 762 comprises an oscillator circuit 781, a counter 782, a pre-set counter 783, a latch circuit 784, a PLL circuit 785, and an amplifier 786. The arrangement and roles of these circuits are the same as those of the polygon mirror motor control circuit 761 shown in Fig. 5, and a detailed description thereof will be omitted.

The control circuit 762 also includes a rotation pulse generator 787 for generating a pulse signal corresponding to rotation of the drum motor 756. The PCPU 766 outputs an ON signal 789 of the drum motor 756 tc the PLL circuit 785, and also outputs a ready signal 790 which is the same as the ready signal 780 shown in Fig.

5.

In the drum motor control circuit 762, the latch circuit 784 is caused to latch an appropriate value in correspondence with an output dot density designating command from the computer 800 or a set value at the select means 769, so that the feed speed of the drum motor 756 can be controlled to a predetermined speed.

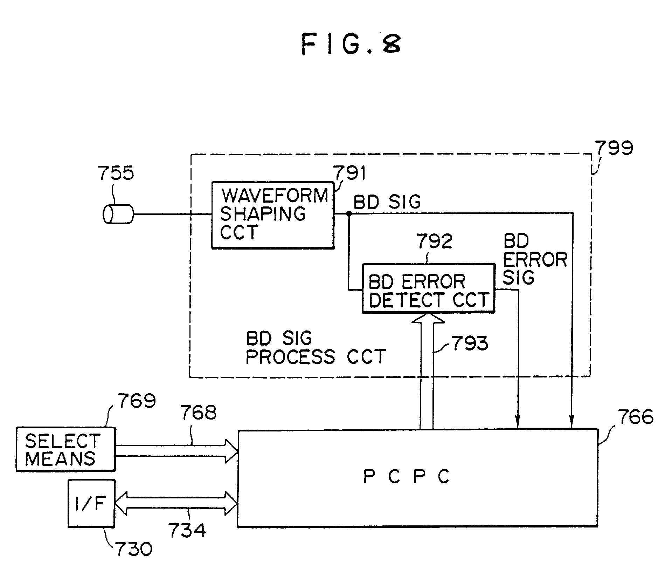

Fig. 8 shows in detail the BD signal process circuit 799 shown in Fig. 4 . A beam detector signal as a detection signal from the beam detector 755 is waveshaped by a waveform shaping circuit 791, and is then output as a BD signal. The BD signal is used for performing synchronization in the main scan direction. The BD signal is also input to a BD error detect circuit 792. The BD error detect circuit 792 monitors whether or not the BD signal is output at a normal timing. If the BD signal is not output at a normal timing, the detect circuit 792 outputs a BD error signal to the PCPU 766.

When an output dot density is changed, the scan speed of the laser beam 720 is changed, and the output timing of the BD signal is also changed. For this purpose, the PCPU 766 supplies data corresponding to the output dot density to the BD error detect circuit 792. The BD error detect circuit 792 switches output timings of an unblanking signal (UNBL) and an error detect sub signal (ERDT) like in the pre-set counter shown in Figs. 5 and 7 in accordance with the input data.

The unblanking signal (UNBL) is used to cause the laser 751 to emit a laser beam at a timing when the laser beam 720 reaches the beam detector 755 in order to reliably obtain the BD signal. Thus, the unblanking signal is output to cause the laser 751 to forcibly emit a laser beam at a timing when the laser beam 720 scans a portion immediately before the beam detector 755.

The error detect sub signal (ERDT) is a timing signal used for determining whether or not the detection timing of the BD signal falls within a predetermined timing width range which is changed depending on the output dot density.

More specifically, the unblanking signal (UNBL) is output at a timing after the lapse of a predetermined period of time (a period of time slightly shorter than a BD signal generating cycle) from the immediately preceding BD signal. The error detect sub signal (ERDT) is output for a ±Δt time from the immediately preceding BD signal until the next BD signal output cycle in which the next BD signal is expected to be input. The Δt time may be a variable corresponding to the output dot density or a fixed value.

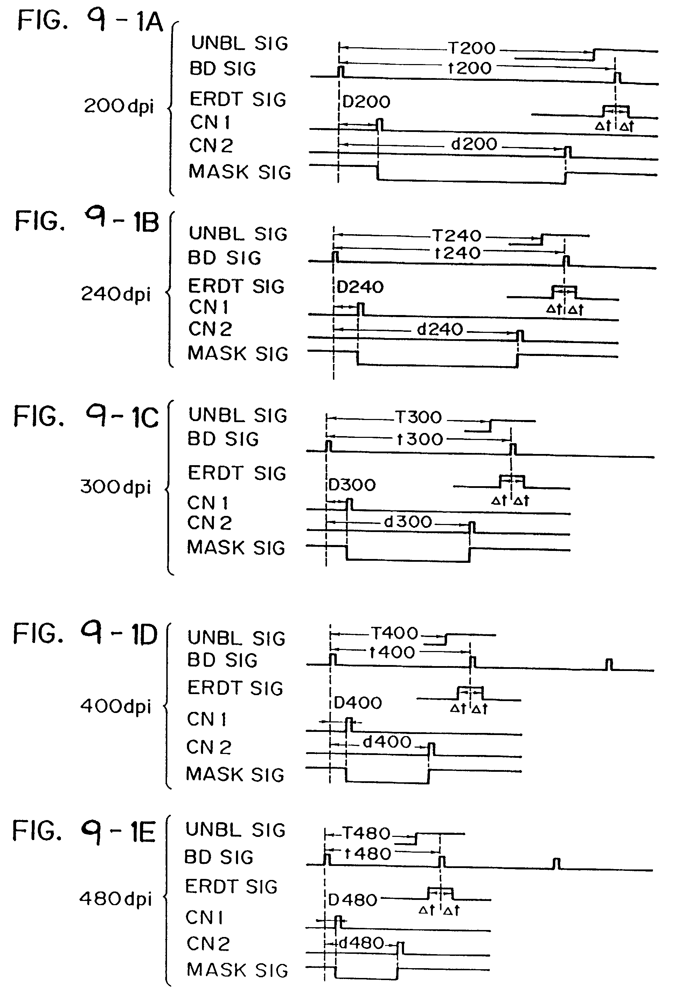

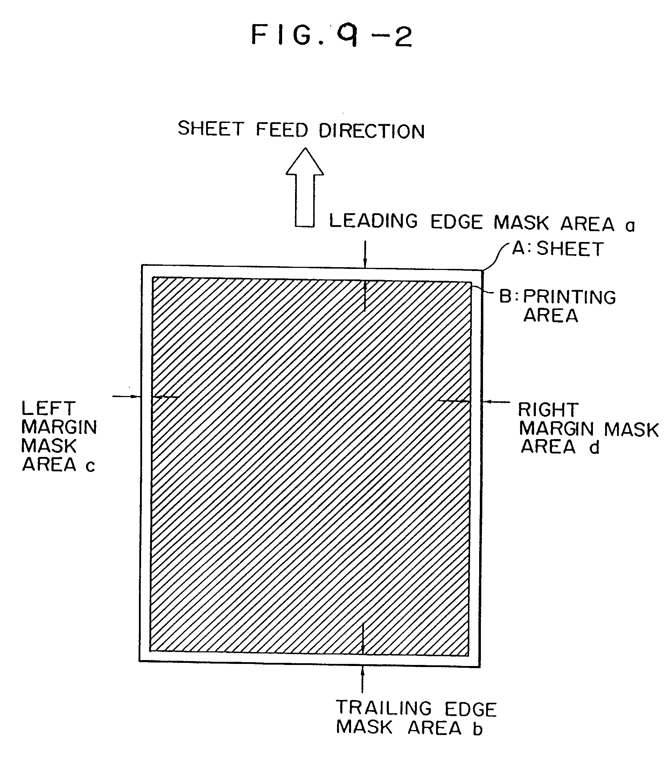

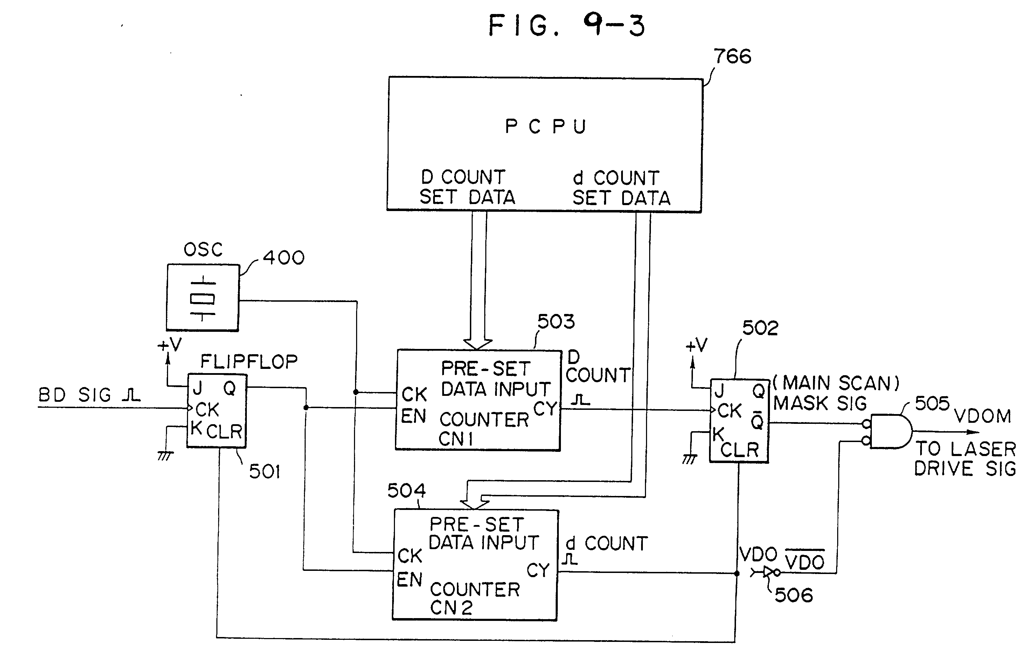

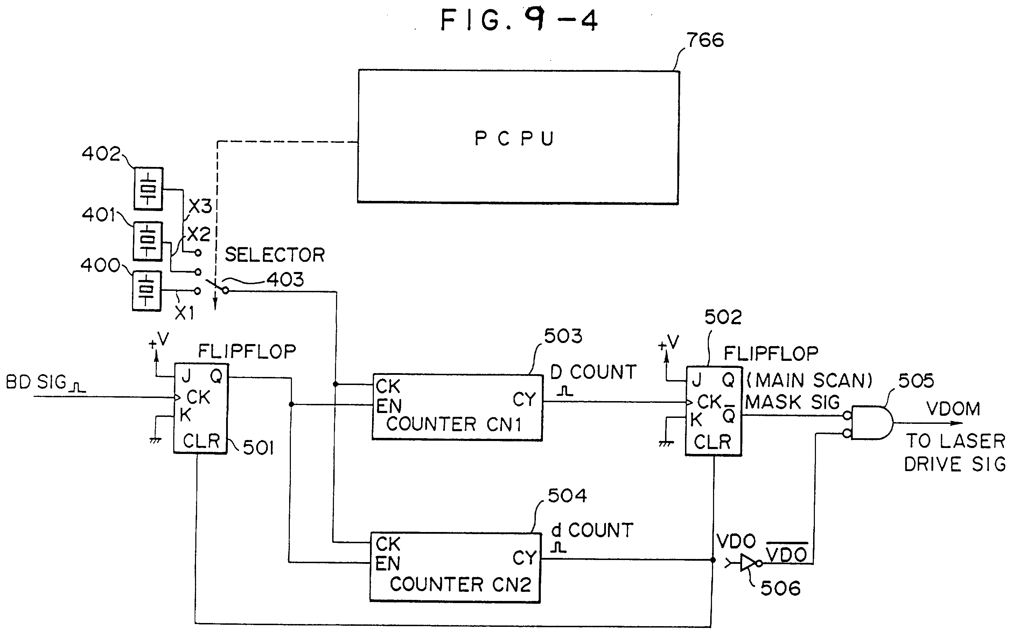

Figs. 9-1A to 9-E show output timings of the unblanking signal (UNBL) and the error detect sub signal (ERDT) corresponding to the output dot densities.

Fig. 9-1A shows the output timings when the dot density is 200 dpi; Fig. 9-1B, 240 dpi; Fig. 9-1C, 300 dpi; Fig. 9-1D, 400 dpi; and Fig. 9-1E, 480 dpi.

When the BD signal is detected at the output timing of the error detect sub signal (ERDT), it is determined that the BD signal output cycle is normal. However, when the BD signal is detected at a timing other than the output timing of the error detect sub signal (ERDT) or no BD signal is detected at all, a BD error is determined, and the BD error signal is output to the PCPU 766.

The output timing of the unblanking signal (UNBL) and the error detection timing of the BD signal can be set to be (arbitrary) optimal values by the PCPU 766 in correspondence with the output dot density. Thus, an accurate beam scan operation is allowed in correspondence with an arbitrary output dot density, and a scan error can be accurately detected.

Fig. 9-2 shows the relationship between a paper sheet A and a printing area B (hatched portion in Fig. 9-2). A leading edge mask area $\underline{a}$, a trailing edge mask area $\underline{b}$, a left margin mask area $\underline{c}$, and a right margin mask area $\underline{d}$ are set as the peripheral portions of the paper sheet A. In the printer of this embodiment, the printing area B is provided, so that no image is formed on the peripheral portions $\underline{a}$, $\underline{b}$, $\underline{c}$, and $\underline{d}$ of the paper sheet A.

Fig. 9-3 is a circuit diagram of a circuit for generating a mask signal for a VDO signal (image signal) in the main scan direction (beam scan direction). Figs. 9-1A to 9-1E show a selection control state of a generation timing of the mask signal in accordance with the dot density.

The circuit shown in Fig. 9-3 includes J-K flip-flops 501 and 502, pre-set counters CN1 (503) and CN2 (504), an AND gate 505, an oscillator 400, and an inverter 506 for inverting an image signal VDO to output an inverted image signal $\overline{VDO}$.

When the BD signal is input, the flip-flop 501 sets its Q output at "H" level. Thus, the counters CN1 (503) and CN2 (504) are set in a count enable state.

The counters CN1 and CN2 are pre-settable counters, and values corresponding to the dot densities are pre-set in these counters as their count values. For example, when the dot density is 300 dpi, a count value $D_{300}$ is pre-set in the counter CN1, and a count value $d_{300}$ is pre-set in the counter CN2. The counters CN1 and CN2 receive a clock output from the oscillator 400, and count the pre-set count values. Thereafter, the counters CN1 and CN2 output pulses to their CY terminals as carry outputs. Thus, the $\overline{Q}$ output of the flip-flop 502, i.e., the mask signal (MASK signal) in the main scan direction is controlled as shown in Figs. 34-1A to 34-1E. The MASK signal is input to the AND gate 505 together with the inverted image signal $\overline{VDO}$. The AND gate 505 outputs a masked image signal VDOM. In this manner, the MASK signal is a signal for forcibly inhibiting inputting of the image signal VDO to the laser drive circuit 760. When the MASK signal is kept at HIGH level, the laser emits no light even if the image signal is at HIGH level. The generation timing of the MASK signal is switched in accordance with the dot density, so that a desired area can be accurately masked.

Fig. 9-4 shows another mask control circuit, and the same reference numerals in Fig. 9-4 denote the same parts as in Fig. 9-3. In Fig. 9-4, the counters CNI. and CN2 are pre-set to fixed count values D and $\underline{d}$ regardless of the dot density.

Crystal oscillators 400, 401, and 402 have different frequency clocks X1, X2, and X3 corresponding to the numbers of lines (dot densities) of 200 dpi, 240 dpi, and 300 dpi. One of the outputs X1, X2, and X3 is selected by a selector 403 under the control of the PCPU 766, and the selected output is supplied to the counters CN1 and CN2. More specifically, the PCPU 766 selects one of the crystal oscillators 400, 401, and 402 in accordance with the designated dot density.

The frequencies of the crystal oscillators 400, 401, and 402 are determined to obtain optimal image mask areas at corresponding dot densities. In this manner, in the circuit shown in Fig. 9-4, the frequency of a clock supplied to the counters CN1 and CN2 is selected in accordance with the designated dot density, so that a desired area can be accurately masked as in Fig. 9-3. Note that the number of crystal oscillators may be increased or a frequency divider may be used to cope with more designated dot densities.

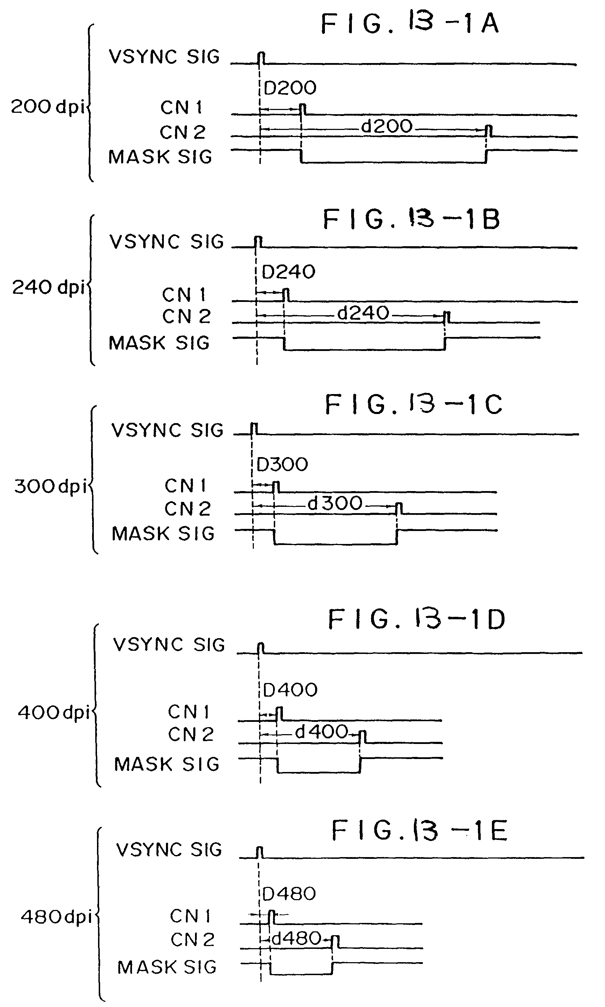

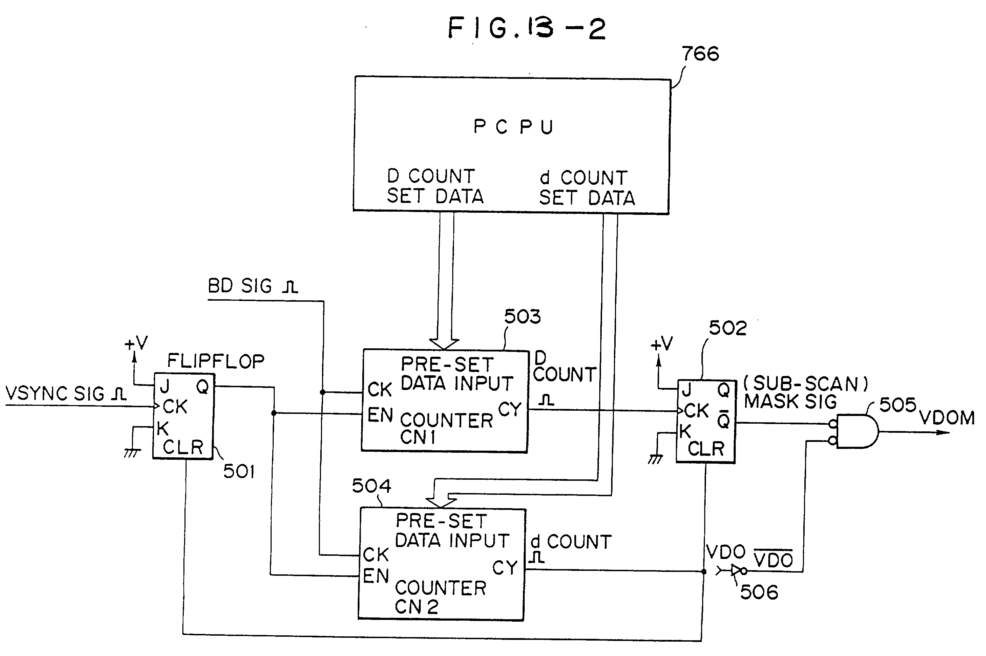

Fig. 13-2 is a circuit diagram of a circuit for generating a mask signal for an image signal (VDO signal) in a sub-scan direction (drum rotation direction). Figs. 13-1A to 13-1E show a selection control state of a generation timing of the mask signal in accordance with the dot density. Note that in the circuit shown in Fig. 13-2, the same reference numerals denote the same parts as in Fig. 9 -3, and a detailed description thereof will be omitted. The operation of the circuit shown in Fig. 13-2 is basically the same as that of Fig. 9-3. However, the counters CN1 and CN2 receive the BD signal in place of a clock from the oscillator 400, and the flip-flop 501 receives a VSYNC signal in place of the BD signal. Thus, the masked signal VDOM in the sub-scan direction can be obtained. Figs. 13-1A to 13-1E show a state wherein the count values of the counters CN1 and CN2 are switched in accordance with the designated dot densities.

In practice, the laser is driven based on an AND product of the MASK signal in the main scan direction shown in Fig. 9 -3 (Fig. 9 -4), the MASK signal in the sub-scan direction shown in Fig. 13 -2, and the inverted image signal ($\overline{VDO}$ signal).

The positions of mask areas in the main scan and sub-scan directions corresponding to a paper sheet may remain the same when a dot density is switched. However, within an area where a toner can be prevented from becoming attached to a portion other than the paper sheet, the mask areas may be varied more or less in accordance with the dot density.

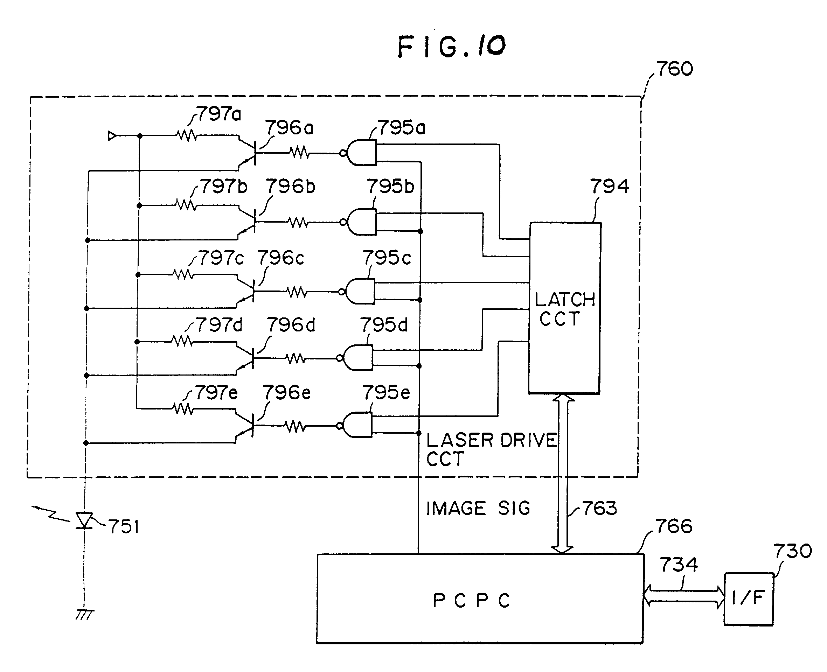

Fig. 10 shows in detail the laser drive circuit 760.

The laser drive circuit 760 includes a latch circuit 794, NAND gates 795a to 795e, driver transistors 796a to 796e, and resistors 797a to 797e having different resistances.

The laser drive circuit 760 turns on/off the semiconductor laser 751 in correspondence with an image signal sent from the computer 800. As described above, when the image signal VDO is to be masked, the image signal VDOM obtained through the circuits shown in Fig. 9-3 (Fig. 9-4) and Fig. 13-2 is applied to the laser drive circuit 760.

In this embodiment, a drive current value for driving the semiconductor laser 751 can be changed in accordance with emission intensity designating data (laser emission intensity change command) or the dot density select command sent from the PCPU 766 through the data line 763. More specifically, one of the outputs of the latch circuit 794 is set in correspondence with the emission intensity designating data or dot density select command supplied from the computer 800, and the NAND gate connected to the set output is enabled, thus making an output corresponding to the image signal.

The selected laser drive transistor 796 is turned on/off in accordance with an image signal, and a current value corresponding to the resistance of the resistor 797 connected to the collector of this transistor 796 is supplied to the semiconductor laser 751. The semiconductor laser 751 emits a laser beam having an intensity corresponding to the magnitude of the current supplied thereto.

With the above arrangement, when the laser emission intensity change command is received from the computer 800 through the I/O bus 734, the output of the latch circuit 794 corresponding to the transistor 796 corresponding to the designated emission intensity is set, and the semiconductor laser 751 emits light at the designated emission intensity. In this manner, the computer 800 can arbitrarily change the laser emission intensity. For example, in a graphic print output mode, the laser emission intensity is lowered to perform a print output with fine dots. In a character print output mode, the laser emission intensity is increased to perform a print output with bold dots.

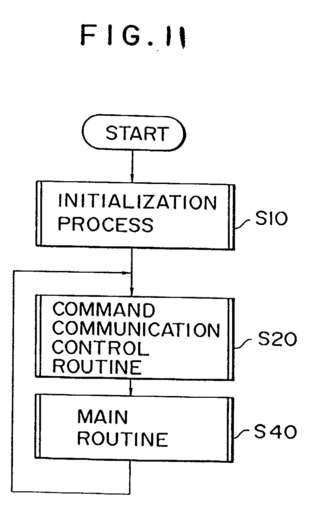

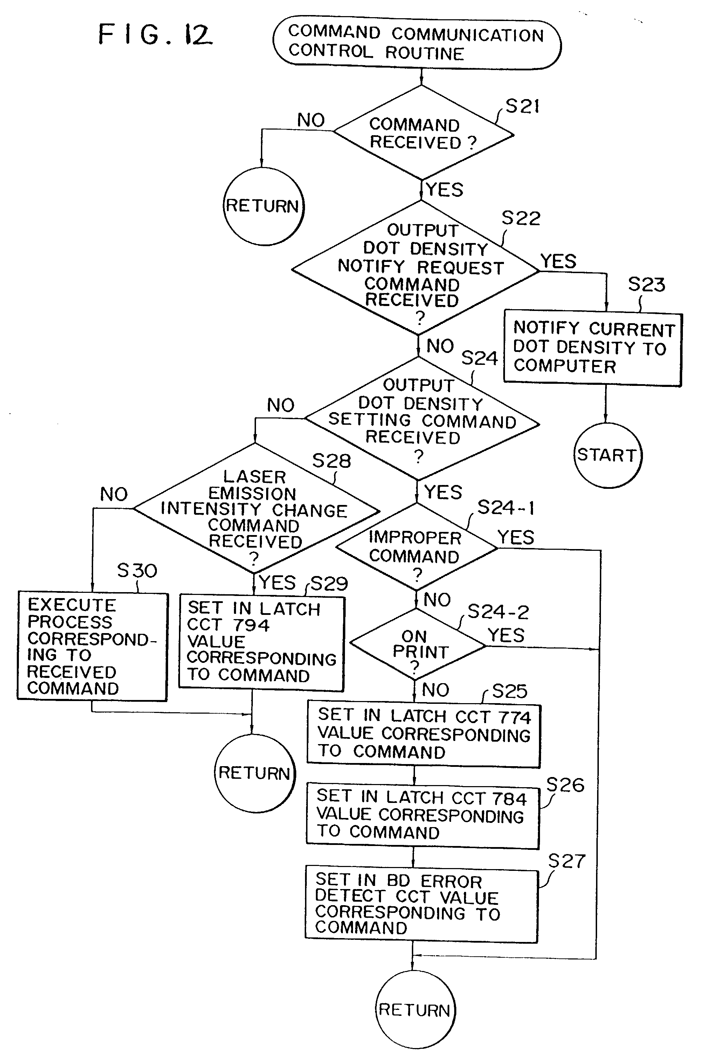

The operation control of the above arrangement will be described below with reference to the flow charts shown in Figs. 11 and 12.

When the power switch of the laser beam printer of is turned on, step S10 is executed to perform initialization processing. In this processing, the content of the RAM 766b is initialized, the rotary polygon mirror 752 is rotated, and the like. In step S20, a command communication control routine for executing communication processing of a printer control command with the computer 800 and the like is executed. When the command is received, analysis & return processing of the received command, processing corresponding to the received command, and the like are executed. Thereafter, the main routine in step S40 is executed. In the main routine, known printer control operations are executed.

Fig. 12 shows in detail the command communication control routine shown in step S20.

It is checked in step S21 if the printer control command from the computer 800 is input. If NO in step S21, the flow returns without any processing. If YES in step S21, it is checked in step S22 if an output dot density notify request command is received. If YES in step S22, the flow advances to step S23, and the output dot density currently set in the printer 700 is notified to the computer 800. Thus, the processing for the received command is ended, and the flow returns. Note that the set output dot density is held in the RAM 766b.

If it is determined in step S22 that the received command is not an output dot density notify request command, the flow advances to step S24 to check if the received command is an output dot density setting command for setting (re-setting) a new output dot density. If YES in step S24, the flow advances to step S24-1 to check if the designated dot density can be set in the printer. If it is determined in step S24-1 that the designated density is an improper one, the flow returns without any processing. If the designated density is a proper one, the flow advances to step S24-2 to check if the printer is an on-print state. If YES in step S24-2, the flow returns without any processing. If NO in step S24-2, the flow advances to step S25, and the PCPU 766 sets a value corresponding to the designated output density included in the received setting command in the latch circuit 774 of the polygon mirror motor control circuit 761. In step S26, the PCPU similarly sets the value corresponding to the designated output density in the latch circuit 784 of the drum motor control circuit 762. In step S27, the PCPU also sets a value corresponding to the output dot density in the BD error detect circuit 792. Thus, the rotary polygon mirror 752, the photosensitive drum 711, and the BD signal process circuit 799 can perform operations matching with the designated output dot density. Thus, the processing ends, and the flow returns.

In step S24-2, the on-print state means that the laser beam is exposing the photosensitive drum. However, the on-print state need not always be an exposure state but may be a period wherein a paper sheet is being conveyed in the printer or may be a period wherein the printer drives the photosensitive drum or the convey motor.

If it is determined in step S24 that the printer control command received from the computer 800 is not the output dot density setting command, the flow advances to step S28 to check if the received command is a laser emission intensity change command. If YES in step S28, the output corresponding to the designated emission intensity is set in the latch circuit 794 of the laser drive circuit 760. Thereafter, the semiconductor laser 751 emits light at an emission intensity corresponding to the selected output of the latch circuit 794 in synchronism with an image signal.

If it is determined in step S28 that the received command is not the laser emission intensity change command, the flow advances to step S30, and processing corresponding to the received command is executed. Upon completion of the processing, the flow returns.

When the dot density which cannot be set in the printer is designated or when the dot density is designated to be changed during printing, the printer as described herein invalidates these designations (requests). Therefore, an erroneous operation or print error can be prevented.

## Claims

1. An image forming apparatus (700) having means (752, 753, 756) for scanning a photosensitive body (711) with light modulated by image data and means (766) for controlling relative scanning speed between the light and the body to vary recording solution in accordance with a resolution setting command sent from an image data source,

   characterised in that

   said image forming apparatus invalidates the resolution setting command which is sent from the image data source during a period when said image forming apparatus is in an on-print state.

2. Apparatus according to claim 1, wherein the on-print state comprises either the state where the light is exposing the photosensitive body, or the state where a document sheet is being fed in said image forming apparatus, or the state where the feeding motor or the photosensitive body is being driven.

3. Apparatus according to claim 1 or claim 2, and further comprising means (755, 791) for generating a beam detector signal (BD) for performing synchronisation of the scanning of the photosensitive body by the modulated light.

4. Apparatus according to any preceding claim, wherein said scanning means comprises deflecting means for deflecting the light beams when it has been modulated by the image data and means for rotating said photosensitive body, and wherein the recording resolution is changed by adjusting the deflection speed of said deflecting means.

5. Apparatus according to any one of claims 1 to 3, wherein said scanning means comprises deflecting means for deflecting the light beam when modulated by the image data and means for rotating said photosensitive body, and wherein the recording resolution is changed by adjusting the drive speed of said photosensitive body.

## Patentansprüche

1. Bilderzeugungsgerät (700) mit Einrichtungen (752, 753, 756) zum Abtasten eines photosensitiven Körpers (711) mit von Bilddaten moduliertem Licht und Einrichtung (766) zur Steuerung der relativen Abtastgeschwindigkeit zwischen dem Licht und dem Körper zur Veränderung der Aufzeichnungsauflösung in Übereinstimmung mit einem von einer Bilddatenquelle gesendeten Befehl zum Setzen der Auflösung,

   gekennzeichnet dadurch, daß

   das Bilderzeugungsgerät den Befehl zum Setzen der Auflösung, der von der Bilddatenquelle während einer Periode, in der das Bilderzeugungsgerät in einem druckbereiten Zustand ist, gesendet wird, ungültig macht.

2. Gerät nach Anspruch 1, wobei der druckbereite Zustand entweder den Zustand darstellt, in dem das Licht den photosensitiven Körper belichtet, oder den Zustand, in dem ein Dokumentenblatt dem Bilderzeugungsgerät zugeführt wird, oder den Zustand, in dem der Zufuhrmotor oder der photosensitive Körper angetrieben werden.

3. Gerät nach Anspruch 1 oder 2, darüberhinaus mit Einrichtungen (755, 791) zur Erzeugung eines Strahldetektorsignals (BD) zur Durchführung von Synchronisation der Abtastung des photosensitiven Körpers durch das modulierte Licht.

4. Gerät nach einem der vorstehenden Ansprüche, wobei die Abtasteinrichtung eine Ablenkeinrichtung hat, um Lichtstrahlen abzulenken, wenn diese durch die Bilddaten moduliert wurden und mit Einrichtung zum Drehen des photosensitiven Körpers und wobei die Aufzeichnungsauflösung durch Einstellen der Ablenkgeschwindigkeit der Ablenkeinrichtung geändert wird.

5. Gerät nach jedem der Ansprüche 1 bis 3, wobei die Abtasteinrichtung eine Ablenkeinrichtung hat, um den durch die Bilddaten modulierten Lichtstrahl abzulenken und mit Einrichtung zum Drehen des photosensitiven Körpers und wobei die Aufzeichnungsauflösung durch Einstellen der Antriebsgeschwindigkeit des photosensitiven Körpers geändert wird.

## Revendications

1. Appareil (700) de formation d'image comportant un moyen (752, 753, 756) pour balayer un corps photosensible (711) avec de la lumière modulée par des données d'image et un moyen (766) pour commander la vitesse de balayage relative entre la lumière et le corps pour faire varier la définition d'enregistrement en fonction d'une instruction d'établissement de définition envoyée par une source de données d'image,

   caractérisé en ce que

ledit appareil de formation d'image invalide l'instruction d'établissement de définition qui est envoyée par la source de données d'image au cours d'une période où ledit appareil de formation d'image est dans un état en cours d'impression.

2. Appareil selon la revendication 1, dans lequel l'état en cours d'impression comprend, soit l'état où la lumière est en cours d'exposition du corps photosensible, soit l'état où une feuille de document est en cours d'alimentation dans ledit appareil de formation d'images, soit l'état où le moteur d'alimentation ou le corps photosensible est en cours d'entraînement.

3. Appareil selon la revendication 1 ou la revendication 2, et comprenant en outre un moyen (755, 791) pour générer un signal (BD) détecteur de faisceau pour effectuer une synchronisation du balayage du corps photosensible par la lumière modulée.

4. Appareil selon l'une quelconque des revendications précédentes, dans lequel ledit moyen de balayage comprend un moyen de déflexion pour défléchir le faisceau lumineux lorsqu'il a été modulé par les données d'image et un moyen pour faire tourner ledit corps photosensible, et dans lequel la définition d'enregistrement est modifiée par un réglage de la vitesse de déflexion dudit moyen de déflexion.

5. Appareil selon l'une quelconque des revendications 1 à 3, dans lequel ledit moyen de balayage comprend un moyen de déflexion pour défléchir le faisceau lumineux lorsqu'il est modulé par les données d'image et un moyen pour faire tourner ledit corps photosensible, et dans lequel la définition d'enregistrement est modifiée par un réglage de la vitesse d'entraînement dudit corps photosensible.

# FIG.1

EP 0 624 025 B1

EP 0 624 025 B1

# FIG. 2

700                  800

| PRINTER | | CONTROLLER |
|---|---|---|
| | PPRDY | |
| | CPRDY | |
| | RDY | |
| | PRNT | |
| | VSREQ | |
| | VSYNC | |
| | BD | |
| | VDO | |
| | SC | |
| | SCLK | |
| | SBSY | |
| | CBSY | |
| | GNRST | |

12

# FIG.3

800 COMPUTER

700 PRINTER

38

800' COMPUTER

FIG. 4

PRINTER 700

- PHOTO-SENSOR 721
- PHOTO-SENSOR 722
- SHEET EJECT ROLLER 709
- FIXING ROLLER 708
- CONVEY ROLLER 707
- REGISTRATION ROLLER 706
- MANUAL SHEET FEED ROLLER 717
- SHEET FEED ROLLER 766a
- SHEET FEED CAM 766b
- 703 704

PCPU 766
ROM 734
RAM

I/F 730
738

COMPUTER 800
I/F 732
736
CPU 767

LASER DRIVE CCT 760
POLYGON MIRROR MOTOR CONTROL CCT 761
DRUM MOTOR CONTROL CCT 758
SELECT MEANS 769

763
764
765
768

757 751 752 720 753 754 755 711 756 759 762

BD SIGNAL PROCESS CCT 799

14

# FIG.5

EP 0 624 025 B1

# FIG. 6

| OUTPUT DOT DENSITY | N | fo | ROTATIONS OF POLYGON MIRROR DRIVE MOTOR |
|---|---|---|---|
| 200 dpi | 120 | 33.33 Hz | 2000 r.p.m |
| 240 dpi | 100 | 40 Hz | 2400 r.p.m |
| 300 dpi | 80 | 50 Hz | 3000 r.p.m |
| 400 dpi | 60 | 66.67 Hz | 4000 r.p.m |
| 480 dpi | 50 | 80 Hz | 4800 r.p.m |

EP 0 624 025 B1

# FIG.7

OSC CCT — 781
COUNTER — 782
I/N PRE-SET COUNTER — 783
LATCH CCT — 784
PLL CCT — 785
AMP — 786
M — 756
787
DRUM MOTOR CONTROL CCT — 762
788
789
765
790
SELECT MEANS — 769
768
I/E — 730
734
PCPU — 766

EP 0 624 025 B1

FIG. 8

FIG. 9-1A

200 dpi { UNBL SIG / BD SIG / ERDT SIG / CN 1 / CN 2 / MASK SIG }

T200, t200, D200, d200, Δt Δt

FIG. 9-1B

240 dpi { UNBL SIG / BD SIG / ERDT SIG / CN 1 / CN 2 / MASK SIG }

T240, t240, D240, d240, Δt Δt

FIG. 9-1C

300 dpi { UNBL SIG / BD SIG / ERDT SIG / CN 1 / CN 2 / MASK SIG }

T300, t300, D300, d300, Δt Δt

FIG. 9-1D

400 dpi { UNBL SIG / BD SIG / ERDT SIG / CN 1 / CN 2 / MASK SIG }

T400, t400, D400, d400, Δt Δt

FIG. 9-1E

480 dpi { UNBL SIG / BD SIG / ERDT SIG / CN 1 / CN 2 / MASK SIG }

T480, t480, D480, d480, Δt Δt

19

# FIG. 9-2

SHEET FEED DIRECTION

LEADING EDGE MASK AREA a

A: SHEET

B: PRINTING AREA

LEFT MARGIN MASK AREA c

RIGHT MARGIN MASK AREA d

TRAILING EDGE MASK AREA b

FIG. 9-3

FIG. 9-4

FIG. 10

# F I G. 11

```
        ┌─────────┐
        │  START  │
        └─────────┘
             │
             ▼
   ┌──────────────────┐
   │ INITIALIZATION   │
   │ PROCESS          │──── S10
   └──────────────────┘
             │
    ┌────────┤
    │        ▼
    │  ┌──────────────────┐
    │  │ COMMAND          │
    │  │ COMMUNICATION    │──── S20
    │  │ CONTROL          │
    │  │ ROUTINE          │
    │  └──────────────────┘
    │        │
    │        ▼
    │  ┌──────────────────┐
    │  │ MAIN             │
    │  │ ROUTINE          │──── S40
    │  └──────────────────┘
    │        │
    └────────┘
```

F I G. 12

Flowchart: COMMAND COMMUNICATION CONTROL ROUTINE

- S21: COMMAND RECEIVED ? — NO → RETURN ; YES ↓
- S22: OUTPUT DOT DENSITY NOTIFY REQUEST COMMAND RECEIVED ? — YES → S23: NOTIFY CURRENT DOT DENSITY TO COMPUTER → START ; NO ↓
- S24: OUTPUT DOT DENSITY SETTING COMMAND RECEIVED ? — NO ↓ ; YES ↓
- S28: LASER EMISSION INTENSITY CHANGE COMMAND RECEIVED ? — NO → S30: EXECUTE PROCESS CORRESPONDING TO RECEIVED COMMAND ; YES → S29: SET IN LATCH CCT 794 VALUE CORRESPONDING TO COMMAND → RETURN
- S24-1: IMPROPER COMMAND ? — YES → (to RETURN) ; NO ↓
- S24-2: ON PRINT ? — YES → (to RETURN) ; NO ↓
- S25: SET IN LATCH CCT 774 VALUE CORRESPONDING TO COMMAND
- S26: SET IN LATCH CCT 784 VALUE CORRESPONDING TO COMMAND
- S27: SET IN BD ERROR DETECT CCT VALUE CORRESPONDING TO COMMAND → RETURN

25

# FIG. 13-1A

200 dpi

VSYNC SIG

D200

CN 1
CN 2
MASK SIG

d200

# FIG. 13-1B

240 dpi

VSYNC SIG

D240

CN 1
CN 2
MASK SIG

d240

# FIG. 13-1C

300 dpi

VSYNC SIG

D300

CN 1
CN 2
MASK SIG

d300

# FIG. 13-1D

400 dpi

VSYNC SIG

D400

CN 1
CN 2
MASK SIG

d400

# FIG. 13-1E

480 dpi

VSYNC SIG

D480

CN 1
CN 2
MASK SIG

d480

# FIG. 13-2

EP 0 624 025 B1